# EUROPÄISCHE PATENTANMELDUNG

(11) **EP 3 450 806 A1**
(43) Veröffentlichungstag der Anmeldung: **06.03.2019**
(21) Anmeldenummer: 17001447.6
(22) Anmeldetag: 29.08.2017
(51) Int. Cl.: F16K 1/42, F16K 31/06

(54) **ELEKTROMAGNETISCHES VENTIL**

(71) Anmelder: Andreas Stihl AG & Co. KG, 71336 Waiblingen (DE)
(72) Erfinder: RAMIER, Jans Peter, 71522 Backnang (DE); LEVIEN, Patrick, 73061 Ebersbach (DE); SCHLAUCH, Patrick, 73730 Esslingen (DE)
(74) Vertreter: Wasmuth, Rolf

(57) **Zusammenfassung**

Die vorliegende Erfindung betrifft ein elektromagnetisches Ventil (1) mit einem Ventilgehäuse (2) und mit mindestens einem Ventilsitz mit einer Dichtfläche (9). Das elektromagnetische Ventil (1) umfasst eine elektrische Antriebspule (3), welche einen Magnetkreis ausbildet. Die Antriebsspule (3) ist von einem Magnetkern (4) des Magnetkreises durchragt. Das elektromagnetische Ventil (1) umfasst eine mit dem Magnetkern (4) zusammenwirkende metallische Ankerplatte (5). Die Ankerplatte (5) bildet einen Ventilkörper (6) und ist gegenüber dem Magnetkern (4) beweglich gelagert. Der Ventilkörper (6) liegt in einer Betriebsstellung an der Dichtfläche (9) des mindestens einen Ventilsitzes an und verschließt den Ventilsitz. In einer Außerbetriebsstellung gibt der Ventilkörper (6) den mindestens einen Ventilsitz frei. Der Ventilsitz weist eine Dichtfläche (9) auf, welche an einem Ringelement (10) ausgebildet ist. Das Ringelement (10) weist mindestens eine Ventilöffnung (29) auf.

## Beschreibung

Die Erfindung betrifft ein elektromagnetisches Ventil der im Oberbegriff des Anspruchs 1 angegebenen Gattung.

Aus der DE 102 42 816 B4 ist ein elektromagnetisches Ventil bekannt. Das Ventil besitzt eine Spule, in der ein Eisenkern angeordnet ist. Am Eisenkern ist eine Ankerplatte angeordnet. Der Eisenkern und die Spule sind von einem Kunststoffgehäuse ummantelt. Bei Stromfluss in der Spule wird die Ankerplatte entgegen einer Federkraft in Richtung des Eisenkerns durch magnetische Kraft angezogen. Die Ankerplatte kontaktiert dabei eine Anlagefläche, die an dem Kunststoffgehäuse ausgebildet ist, und schaltet durch das Kunststoffgehäuse verlaufende Strömungskanäle. In Abhängigkeit des verwendeten Fluids neigen die Bereiche des Kunststoffgehäuses, welche im Kontakt mit dem Fluid stehen, insbesondere die Strömungskanäle und die Anlageflächen, zum Verschleiß. Dieser tritt vornehmlich durch mineralische Partikel im Fluid auf, die abrasiv wirken. Zusätzlich lagern sich die Partikel in den Anlageflächen des Kunststoffgehäuses und in der Ankerplatte ein und können zur Leckage des elektromagnetischen Ventils führen.

Der Erfindung liegt die Aufgabe zugrunde, ein elektromagnetisches Ventil der gattungsgemäßen Art zu schaffen, das mit wenigen Bauteilen einfach herstellbar ist und eine erhöhte Verschleißbeständigkeit, insbesondere gegen abrasive Partikel, besitzt.

Diese Aufgabe wird durch ein elektromagnetisches Ventil mit den Merkmalen des Anspruchs 1 gelöst.

Das elektromagnetische Ventil mit einem Ventilgehäuse umfasst mindestens einen Ventilsitz, wobei der Ventilsitz eine Dichtfläche aufweist. Die Dichtfläche des Ventilsitzes ist an einem Ringelement ausgebildet. Das Ringelement weist mindestens eine Ventilöffnung auf.

Das Ringelement ist derart am Ventilgehäuse angeordnet, dass es an Bereichen mit erhöhter Erosionsbelastung mit dem Fluid in Kontakt steht. Demnach ist das Ringelement in Bereichen des elektromagnetischen Ventils angeordnet, in denen erhöhter Verschleiß auftritt. Durch die gezielte Wahl des Werkstoffes des Ringelementes, insbesondere die gezielte Wahl der Werkstoffpaarung aus dem Ringelement und der metallischen Ankerplatte, kann das elektromagnetische Ventil spezifisch auf ein ausgewähltes Fluid angepasst werden. Da lediglich der Werkstoff des Ringelementes bei der Herstellung des elektromagnetischen Ventils anzupassen ist, kann der Werkstoff des Ventilgehäuses beibehalten werden. Dadurch kann auf einfache Weise an Bereichen mit erhöhter Erosionsbelastung der Verschleiß reduziert werden, ohne dabei die Strömungseigenschaften zu beeinflussen. Zudem ist auch eine Verbesserung der Strömungseigenschaften des Fluids möglich.

Es ist vorteilhaft vorgesehen, dass das Ringelement aus Metall besteht. Vorteilhaft besteht das Ringelement mindestens teilweise, insbesondere vollständig, aus einem Metall und/oder einer Metalllegierung. Das Metall des Ringelementes ist magnetisch. Demnach besteht auch der Ventilsitz mit der Dichtfläche aus Metall und ist dadurch besonders widerstandsfähig gegen Verschleiß. Eine Einlagerung von Partikeln in den Ventilsitz kann verhindert werden. Auch ein langfristiger Verschleiß durch abrasive Partikel kann vermieden werden.

Vorteilhaft besteht das Ringelement aus einem nichtmagnetischen Metall, insbesondere aus einem Edelstahl. Bei eingeschaltetem Strom in einer elektrischen Antriebsspule wird im Eisenkern ein Magnetfeld erzeugt, durch das die magnetische Ankerplatte gegen die Dichtfläche des Ventilsitzes gezogen wird. Besteht das Ringelement aus einem nichtmagnetischen Metall, ist das Ringelement kein Teil des Magnetfeldes des elektromagnetischen Ventils. Dadurch kann ein magnetischer Kurzschluss vermieden werden und die vom Magnetkern ausgehende Magnetkraft zur Anziehung der metallischen Ankerplatte erhöht werden.

Außerdem bestehen der Ventilsitz und dessen Dichtfläche aus Metall und/oder der Metalllegierung. Der Ventilsitz und dessen Dichtfläche wirken mit der metallischen Ankerplatte zusammen. Dadurch kann sich beispielsweise der Verschleiß an der Dichtfläche des Ventilsitzes gegenüber einer Dichtfläche aus Kunststoff erheblich reduzieren. Demnach erhöht sich die Lebenszeit des elektromagnetischen Ventils. Außerdem kann eine gute Dichtwirkung zwischen der Dichtfläche des Ventilsitzes an dem Ringelement und der metallischen Ankerplatte über eine lange Betriebsdauer des elektromagnetischen Ventils erzielt werden. Vorteilhaft gleicht sich die Dichtfläche der metallischen Ankerplatte an. Dadurch kann sich die Dichtwirkung des elektromagnetischen Ventils nach längerer Betriebsdauer erhöhen.

Vorteilhaft umfasst das elektromagnetische Ventil ein Joch. Das Joch ist vorzugsweise mit dem Magnetkern einteilig ausgebildet. Auch eine zweiteilige Ausbildung zwischen Magnetkern und Joch ist vorteilhaft möglich. Das Ringelement besitzt eine mit dem Joch zumindest teilweise in Kontakt stehende erste Stirnseite. Vorteilhaft ist das Ringelement am Joch formschlüssig angeordnet. Dadurch kann das Magnetfeld zwischen Joch, Magnetkern und Ringelement begünstigt werden. Ein derartiges Magnetfeld kann die Anziehungskräfte zwischen dem Ringelement und der metallischen Ankerplatte erhöhen. Demnach ist eine Auslegung der Bauteile, wie der Magnetkern, das Joch oder die elektrische Antriebsspule, in geringerer Baugröße möglich. Durch die formschlüssige Verbindung zwischen Ringelement und Joch ist das Ringelement auch bei hoher Belastung gegen Lösen gesichert.

Vorteilhaft weist das Ringelement an seiner von der Antriebsspule abgewandten zweiten Stirnseite einen Absatz auf, wobei an dem Absatz die Dichtfläche des Ventilsitzes ausgebildet ist. Dadurch können bessere Dichteigenschaften zwischen der Dichtfläche des Ventilsitzes und der metallischen Ankerplatte erreicht werden. Durch die Ausbildung der Dichtfläche auf dem Absatz steht die Dichtfläche des Ventilsitzes gegenüber der restlichen Fläche der zweiten Stirnseite des Ringelementes zur Ankerplatte vor. Vorteilhaft ist die Dichtfläche des Ventilsitzes von der restlichen Fläche des Ringelementes beabstandet. Liegt die Ankerplatte an der Dichtfläche an, so steht die Ankerplatte mit der restlichen Fläche der zweiten Stirnseite des Ringelementes nicht in Kontakt. Dadurch entsteht ein Restluftspalt zwischen dem Ringelement und der metallischen Ankerplatte. Da kein flächiger Kontakt zwischen der metallischen Ankerplatte und der restlichen Fläche des Ringelementes entsteht, können auch größere Adhäsionskräfte vermieden werden. Große Adhäsionskräfte würden ein Lösen der Ankerplatte von dem Ringelement erschweren. Der Flächeninhalt der Dichtfläche ist gegenüber dem Flächeninhalt der zweiten Stirnseite gering. Der Flächeninhalt der Dichtfläche beträgt weniger als 10% des Flächeninhalts der zweiten Stirnseite. Durch den geringen Flächeninhalt der Dichtfläche ist die Flächenpressung bei Kontakt zwischen Dichtfläche und Ankerplatte an der Dichtfläche hoch, wodurch eine bessere Abdichtung zwischen Dichtfläche und Ankerplatte ermöglicht wird.

Vorteilhaft wird das Ringelement an dem Ventilgehäuse gehalten, insbesondere eingegossen, vorteilhaft eingespritzt. Dadurch werden keine zusätzlichen Bauteile zur Befestigung des Ringelementes benötigt, wodurch die Herstellung des elektromagnetischen Ventils vereinfacht und eine Reduzierung des Bauraums erzielt ist. Vorteilhaft könnte das Ringelement an das Joch auch geklebt oder geschweißt werden.

Es ist vorteilhaft vorgesehen, dass das elektromagnetische Ventil einen Ventilraum aufweist, und dass in dem Ventilraum mindestens ein erster Strömungskanal mündet. Vorzugsweise mündet in den Ventilraum ein zweiter Strömungskanal. Vorteilhaft verläuft der mindestens eine erste Strömungskanal durch das Ventilgehäuse und durch das Ringelement und mündet in eine Strömungsöffnung des Ringelements in den Ventilraum. Vorteilhaft ist an einer dem Ringelement zugewandten Seite des Ventilraums eine Öffnung aus dem Ventilraum ausgebildet. Der zweite Strömungskanal mündet in der Öffnung in den Ventilraum. Dadurch sind der mindestens eine erste Strömungskanal und der mindestens eine zweite Strömungskanal fluidisch miteinander verbunden, wenn sich die Ankerplatte in der ersten Stellung befindet. Die erste Stellung bezeichnet die Stellung des elektromagnetischen Ventils, wenn die elektrische Antriebsspule nicht bestromt ist. Bei dem elektromagnetischen Ventil handelt es sich vorteilhaft um ein stromlos offenes Ventil. Die erste Stellung bei einem stromlos offenen Ventil bedeutet, dass die Dichtfläche des Ventilsitzes des Ringelements nicht mit der metallischen Ankerplatte zusammenwirkt. Demnach besteht in der ersten Stellung bei einem stromlos offenen Ventil eine fluidische Verbindung zwischen dem mindestens einen ersten Strömungskanal und dem mindestens einen zweiten Strömungskanal. Demnach ist in der ersten Stellung beispielsweise die Förderung des Fluids durch das elektromagnetische Ventil möglich. Das Fluid kann in der ersten Stellung von dem ersten Strömungskanal durch das Ventilgehäuse und durch das Ringelement über den Ventilraum in den zweiten Strömungskanal fließen. Um einen höheren Strömungsquerschnitt zu erreichen, sind vorteilhaft mehrere erste Strömungskanäle und/oder mehrere zweite Strömungskanäle vorgesehen, die über den Ventilraum miteinander fluidisch verbunden sind.

In einer zweiten Stellung des elektromagnetischen Ventils ist die elektrische Antriebsspule bestromt. Dadurch wirkt ein Magnetfeld, welches die metallische Ankerplatte in Richtung des Ringelementes zieht. Die metallische Ankerplatte wirkt mit der Dichtfläche des Ventilsitzes zusammen. Die metallische Ankerplatte versperrt die fluidische Verbindung zwischen dem ersten Strömungskanal und dem zweiten Strömungskanal. In der zweiten Stellung des elektromagnetischen Ventils ist die Förderung des Fluids nicht möglich.

Der Ventilsitz besteht vorteilhaft aus dem an dem Ringelement ausgebildeten Absatz und aus der an dem Absatz ausgebildeten Dichtfläche. Vorteilhaft umfasst das Ventilgehäuse mindestens zwei Ventilsitze, insbesondere mindestens drei Ventilsitze. Mit zunehmender Anzahl der Ventilsitze erhöht sich auch die Anzahl der ersten Strömungskanäle, wodurch sich der Strömungsquerschnitt erhöhen kann. Außerdem kann mit zunehmender Anzahl der Ventilsitze und deren gleichmäßiger Verteilung an dem Ringelement eine gleichmäßigere Strömung des Fluids erreicht werden. Dadurch kann der Volumenstrom im elektromagnetischen Ventil erhöht werden.

Es ist vorteilhaft vorgesehen, dass die Ankerplatte in Richtung der ersten Stellung federbelastet ist. Vorteilhaft wirkt auf die Ankerplatte eine Feder, die die Ankerplatte nach Deaktivierung des Stromflusses in der elektrischen Antriebsspule in die erste Stellung bewegt. Durch den schnellen Bewegungswechsel der Ankerplatte von zweiter Stellung in erste Stellung wird ein ausreichend großer Strömungsquerschnitt freigegeben. Dadurch werden kurze Schaltzeiten des elektromagnetischen Ventils ermöglicht.

Ausführungsbeispiele der Erfindung werden im Folgenden anhand der Zeichnungen erläutert. Es zeigen:
- Fig. 1: eine perspektivische Darstellung eines elektromagnetischen Ventils ohne Ventilgehäuse und metallische Ankerplatte,
- Fig. 2: eine perspektivische Darstellung des elektromagnetischen Ventils aus Fig. 1 mit separatem Ringelement,
- Fig. 3: eine Ansicht von unten eines elektromagnetischen Ventils mit Ventilgehäuse ohne metallische Ankerplatte,
- Fig. 4: eine Schnittdarstellung entlang der Linie III-III in Fig. 3 des elektromagnetischen Ventils,
- Fig. 5: eine Schnittdarstellung entlang der Linie III-III in Fig. 3 eines elektromagnetischen Ventils mit Ventilgehäuse in der ersten Stellung und
- Fig. 6: eine Schnittdarstellung entlang der Linie III-III in Fig. 3 des elektromagnetischen Ventils mit Ventilgehäuse in der zweiten Stellung.

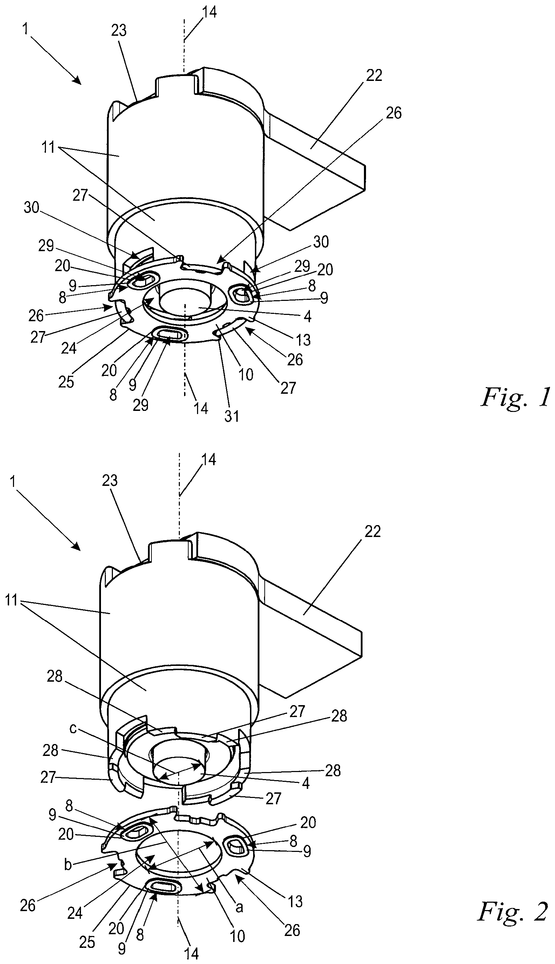

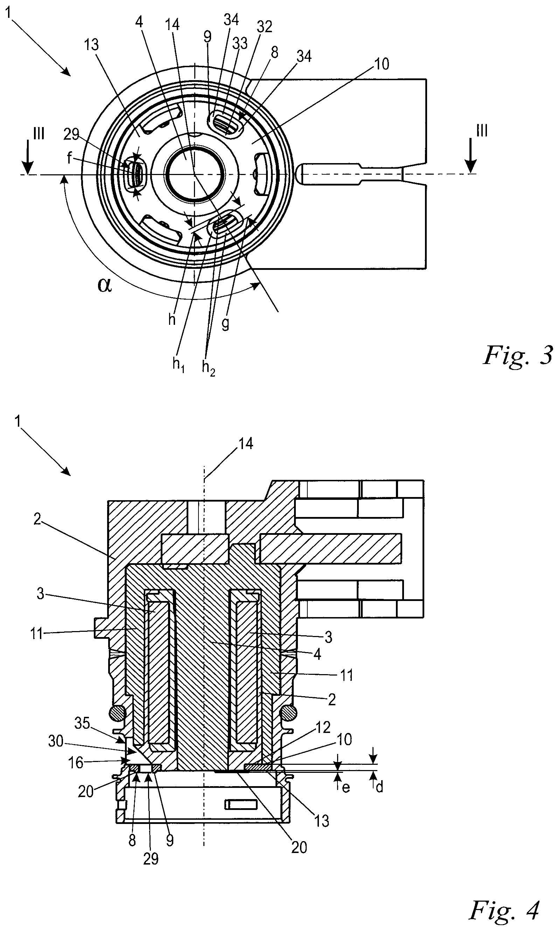

In den Figuren 1 und 2 ist ein Ausführungsbeispiel eines elektromagnetischen Ventils 1 dargestellt. Das elektromagnetische Ventil 1 weist eine elektrische Antriebsspule 3 (Fig. 4) auf, in der ein Magnetkern 4 angeordnet ist. Das elektromagnetische Ventil 1 weist eine Längsmittelachse 14 auf. Die Längsmittelachse 14 verläuft mittig durch den Magnetkern 4 entlang seiner Längsrichtung. Der Magnetkern 4 ist vorzugsweise einteilig mit einem die elektrische Antriebsspule 3 umgebenden Joch 11 ausgebildet. Das Joch 11 ist vorteilhaft topfförmig ausgebildet. Der Magnetkern 4 ist vorteilhaft über einen Abschnitt 23 des Jochs 11 mit dem Joch 11 verbunden. An dem Abschnitt 23 auf der dem Magnetkern 4 abgewandten Seite ist ein elektrischer Anschlussstecker 22 angeordnet. Über den elektrischen Anschlussstecker 22 kann das elektromagnetische Ventil 1 an einen Stromkreis angeschlossen und mit Strom versorgt werden.

Wie das Ausführungsbeispiel in den Figuren 1 und 2 zeigt, ist an der dem Abschnitt 23 abgewandten Seite des Jochs 11 an dem Joch 11 ein Ringelement 10 angeordnet. Das Ringelement 10 besitzt eine erste Stirnseite 12 (Fig. 4), die dem Boden 23 des Jochs 11 zugewandt ist. Das Ringelement 10 weist eine zweite Stirnseite 13 auf, die dem Abschnitt 23 des Jochs 11 abgewandt ist. Das Ringelement 10 ist in etwa ringförmig ausgebildet. Das Ringelement 10 ist im Wesentlichen kreisscheibenförmig. Das Ringelement 10 weist vorteilhaft eine konzentrisch zur Längsmittelachse 14 ausgebildete innere Öffnung 24 auf. Das Ringelement 10 besitzt einen inneren Durchmesser a, welcher dem Durchmesser der inneren Öffnung 24 des Ringelements 10 entspricht. Das Ringelement 10 besitzt einen äußeren Durchmesser b, welcher im Wesentlichen den Außendurchmesser des Ringelements 10 angibt. Der äußere Durchmesser b des Ringelements 10 ist größer als der innere Durchmesser a des Ringelements 10. Der Magnetkern 4 weist einen Durchmesser c auf. In vorteilhafter Ausführung ist der äußere Durchmesser b mindestens 1,5mal so groß wie der innere Durchmesser a. In vorteilhaftem Ausführungsbeispiel ist der innere Durchmesser a mindestens 1,25mal, vorzugsweise mindestens 1,5mal so groß wie der Durchmesser c des Magnetkerns 4.

Wie in den Figuren 1 und 2 gezeigt, besitzt das Ringelement 10 einen äußeren Rand 25. In dem Rand 25 sind in einem Winkelabstand von in etwa 120° Aussparungen 26 ausgebildet. Auf der dem Abschnitt 23 abgewandten Seite des Jochs 11 sind Anlageflächen 28 und Erhebungen 27 ausgebildet. Vorzugsweise sind die Erhebungen 27 in einem Winkelabstand von 120° zueinander angeordnet. Das Ringelement 10 ist vorteilhaft an dem Joch 11 derart angeordnet, dass die Erhebungen 27 des Jochs 11 in die Aussparungen 26 des Ringelements 10 greifen und die Anlageflächen 28 des Jochs 11 die erste Stirnseite 12 des Ringelements 10 kontaktieren. Dadurch ist das Ringelement 10 mit dem Joch 11 formschlüssig verbunden. Dadurch ist das Ringelement 10 formschlüssig gegen ein Verdrehen um die Längsmittelachse 14 gegenüber dem Joch 11 gesichert. Demnach ist das Ringelement 10 radial zur Längsmittelachse 14 formschlüssig und axial zur Längsmittelachse 14 reibkraftschlüssig gesichert. In einem vorteilhaften Ausführungsbeispiel liegen die zweite Stirnseite 13 des Ringelementes 10 und die auf der Erhebung 27 ausgebildete dem Abschnitt 23 abgewandte Fläche in einer Ebene, welche senkrecht zur Längsmittelachse 14 liegt. Das Ringelement 10 weist mindestens eine Nase 31 auf. Im Ausführungsbeispiel sind an jeder Aussparung 26 des Ringelementes 10 jeweils zwei Nasen 31 an dem äußeren Rand 25 ausgebildet. Daher weist das Ringelement 10 mindestens sechs Nasen 31 auf, die das Ringelement 10 im in das Ventilgehäuse 2 eingespritzten Zustand gegen ein Lösen in Richtung der Ankerplatte 5 sichern.

Wie in der Fig. 1 gezeigt, endet der Magnetkern 4 mit seiner dem Abschnitt 23 abgewandten Seite in Richtung der Längsmittelachse 14 zwischen einer Ebene, in welcher die erste Stirnseite 12 des Ringelementes 10 liegt und einer Ebene, in welcher die zweite Stirnseite 13 des Ringelementes 10 liegt.

In den Fig. 1 und 2 ist gezeigt, dass das Ringelement 10 drei Ventilsitze 8 und drei Ventilöffnungen 29 enthält. Jede Ventilöffnung 29 ist von einem Ventilsitz 8 umschlossen. Jeder Ventilsitz 8 besitzt einen Absatz 20 und eine Dichtfläche 9. In einem vorteilhaften Ausführungsbeispiel kann im Betrieb des elektromagnetischen Ventils 1 ein zu steuerndes Fluid, insbesondere ein Kraftstoff, durch die Ventilöffnungen 29 fließen. Um den Strömungsquerschnitt zu verändern, kann die Anzahl der Ventilöffnungen 29 entsprechend angepasst werden. So enthält in vorteilhaftem Ausführungsbeispiel das Ringelement 10 mindestens eine Ventilöffnung 29, insbesondere mindestens zwei Ventilöffnungen 29, vorzugsweise mindestens drei Ventilöffnungen 29. In vorteilhafter Ausführung kann das Ringelement 10 auch vier oder mehr Ventilöffnungen 29 enthalten. Auf der zweiten Stirnseite 13 des Ringelementes 10 ist ein die Ventilöffnung 29 umlaufender Ventilsitz 8 angeordnet. Der Ventilsitz 8 besteht aus einer Dichtfläche 9 und aus einem Absatz 20. Der Absatz 20 erstreckt sich ausgehend von der zweiten Stirnseite 13 des Ringelementes 10 in eine Richtung parallel zur Längsmittelachse 14. An dem Absatz 20 ist die Dichtfläche 9 ausgebildet, wobei die Dichtfläche 9 in einer Ebene liegt, die senkrecht zur Längsmittelachse 10 steht.

Für das Ringelement 10 können verschiedene Werkstoffe oder Werkstoffkombinationen eingesetzt werden. Im Ausführungsbeispiel besteht das Ringelement 10 aus einem magnetischen Metall, insbesondere aus einer magnetischen Stahllegierung. In vorteilhafter Ausführung besteht das Ringelement 10 aus einem nichtmagnetischen Metall, insbesondere aus einer nichtmagnetischen Stahllegierung, vorzugsweise aus einem Edelstahl.

Wie in Fig. 1 gezeigt, sind an dem Joch 11 auf seiner dem Abschnitt 23 abgewandten Seite Aussparungen ausgebildet, welche Öffnungen 30 zwischen dem Ringelement 10 und dem Joch 11 bilden. Das Fluid kann über die Öffnungen 30 des Jochs 11 hin zu den Ventilöffnungen 29 des Ringelementes 10 fließen. Die Anzahl der am Joch 11 ausgebildeten Öffnungen 30 entspricht vorzugsweise der Anzahl der Ventilöffnungen 29 des Ringelementes 10.

Wie in Fig. 3 gezeigt, sind die Ventilöffnungen 29 des Ringelements 10 zueinander symmetrisch um die Längsmittelachse 14 angeordnet. Im Ausführungsbeispiel besitzen die drei Ventilöffnungen 29 zueinander jeweils einen gleichen Winkelabstand α in Umfangsrichtung von 120°. In vorteilhafter Ausführung ist auch ein ungleichmäßiger Winkelabstand α der Ventilöffnungen 29 zueinander möglich. Die Ventilöffnung 29 besitzt in Draufsicht, welche einer Blickrichtung senkrecht auf die zweite Stirnseite 13 des Ringelementes 10 entspricht, eine in etwa ovale Öffnungsform. Die Ventilöffnung 29 besitzt eine in Umfangsrichtung der Längsmittelachse 14 gemessene maximale Länge f und eine in radialer Richtung zur Längsmittelachse 14 gemessene maximale Breite g. Die Länge f der Ventilöffnung 29 ist vorzugsweise größer als die Breite g der Ventilöffnung 29. In einem vorteilhaften Ausführungsbeispiel entspricht die Länge f der Ventilöffnung 29 mindestens der doppelten Breite g der Ventilöffnung 29.

Die Dichtfläche 9 verläuft um die Ventilöffnung 29 und weist eine Breite h auf, welche radial zum Flächenmittelpunkt der Ventilöffnung 29 gemessen ist. Die Ventilöffnung 29 weist eine innere Längsseite 32 und eine äußere Längsseite 33 auf, die sich in Umfangsrichtung der Längsmittelachse 14 erstrecken, und zwei sich in radialer Richtung der Längsmittelachse 14 erstreckende Querseiten 34. Die Querseiten 34 verbinden die innere Längsseite 32 und die äußere Längsseite 33 miteinander. In vorteilhafter Ausführung können die Ventilöffnungen 29 auch kreisrund ausgebildet sein.

In vorteilhaftem Ausführungsbeispiel sind die Breiten h₁ der Dichtfläche 9 an den Querseiten 34 der Ventilöffnungen 29 größer als die Breite h₂ der Dichtfläche 9 an den Längsseiten 32, 33 der Ventilöffnung 29.

Der Radius der Ventilöffnung 29 ist am Übergang zwischen der Querseite 34 und der inneren Längsseite 32 größer als der Radius an den Übergängen zwischen den Querseiten 34 und der äußeren Längsseite 33. In vorteilhafter Ausführung kann die Ventilöffnung 29, beispielsweise zur Begünstigung des Fluidstroms, auch auf andere Art, insbesondere elliptisch, geformt sein.

Wie in Fig. 4 gezeigt, sind die elektrische Antriebsspule 3, das Joch 11 mit dem Magnetkern 4 und das Ringelement 10 in dem aus Kunststoff bestehenden Ventilgehäuse 2 eingegossen, insbesondere eingespritzt. Der Kunststoff des Ventilgehäuses 2 besteht in einem vorteilhaften Ausführungsbeispiel aus Polyvinylidenfluorid (PVDF). Das elektromagnetische Ventil 1 enthält mindestens einen ersten Strömungskanal 16. Der erste Strömungskanal 16 verläuft ausgehend von einer Gehäuseöffnung 35 bis zur Ventilöffnung 29. Die Gehäuseöffnung 35 liegt in der Außenseite des Ventilgehäuses 2. Der erste Strömungskanal 16 erstreckt sich in vorteilhafter Ausführung über die Öffnung 30 des Jochs 11 hin zur Ventilöffnung 29 des Ringelementes 10. Die Anzahl der Gehäuseöffnungen 35 sowie die Anzahl der Strömungskanäle 16 entsprechen vorzugsweise der Anzahl der Ventilöffnungen 29 des Ringelementes 10.

Wie in Fig. 4 gezeigt, entspricht die Höhe des Absatzes 20 dem in Richtung der Längsmittelachse 14 gemessenen Abstand zwischen der zweiten Stirnseite 13 des Ringelementes 10 und der Dichtfläche 9. Die Höhe d des Ringelementes 10 entspricht dem in Richtung der Längsmittelachse 14 gemessenen Abstand zwischen der ersten Stirnseite 12 und der zweiten Stirnseite 13 des Ringelementes 10. Im Ausführungsbeispiel ist die Höhe e des Absatzes 20 kleiner als die Höhe d des Ringelementes 10. In vorteilhafter Ausführung beträgt die Höhe d des Ringelementes 10 mindestens der 3fachen, insbesondere mindestens der 5fachen Höhe e des Absatzes 20. Die Breite h der Dichtfläche 9 (Fig. 3) ist größer als die Höhe e des Absatzes 20. In vorteilhafter Ausführung entspricht die Breite h mindestens der 3fachen Höhe e des Absatzes 20. In einem vorteilhaften Ausführungsbeispiel liegt die dem Abschnitt 23 abgewandte Seite des Magnetkerns 4 in einer Ebene, welche zwischen der zweiten Stirnseite 13 des Ringelementes 10 und der Dichtfläche 9 des Ventilsitzes 8 des Ringelementes 10 liegt.

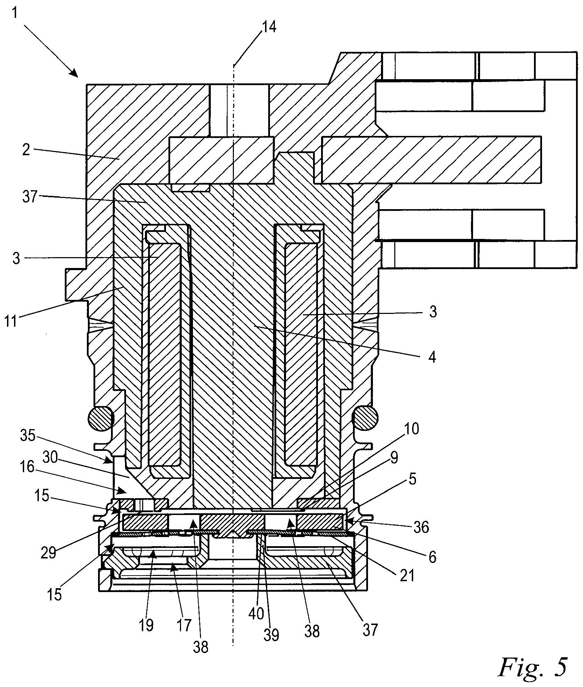

In Fig. 5 ist das elektromagnetische Ventil 1 in der ersten Stellung gezeigt. An der dem Abschnitt 23 des Jochs 11 abgewandten Seite des Jochs 11 ist eine metallische Ankerplatte 5 in Richtung der Längsmittelachse 14 im Ventilgehäuse 2 beweglich gelagert. Die Ankerplatte 5 ist kreisscheibenförmig ausgebildet und durch eine Ventilfeder 21 konzentrisch zur Längsmittelachse 14 im Ventilgehäuse 2 gelagert. Zwischen dem Ventilgehäuse 2 und der Ankerplatte 5 ist vorzugsweise am Umfang der Ankerplatte 5 ein Ringspalt 36 gebildet. Außerdem enthält die Ankerplatte 5 mindestens einen Strömungskanal 38, welcher parallel zur Längsmittelachse 14 verläuft. In vorteilhafter Ausführung enthält die Ankerplatte 5 mehrere Strömungskanäle 38, welche in Umfangsrichtung symmetrisch zur Längsmittelachse 14 angeordnet sind. In vorteilhafter Ausführung ist auch eine unsymmetrische Anordnung der Strömungsöffnungen 38 um die Längsmittelachse 14 möglich.

Wie in Fig. 5 gezeigt, besitzt die Ventilfeder 21 einen Außenumfang und einen Innenumfang. Die Ventilfeder 21 ist an ihrem Außenumfang an dem Ventilgehäuse 2 befestigt und an ihrem Innenumfang mit der Ankerplatte 5 fest verbunden. Die Ventilfeder 21 enthält Strömungsöffnungen. Vorzugsweise ist die Ventilfeder 21 als Flachfeder mit meanderförmigen Biegearmen ausgebildet. Auch der Einsatz anderer Federn kann zweckmäßig sein.

Wie in Fig. 5 gezeigt, umfasst das elektromagnetische Ventil 1 einen Ventildeckel 37. Der Ventildeckel 37 ist im Ventilgehäuse 2 auf der dem Abschnitt 23 des Jochs 11 abgewandten Seite der Ankerplatte 5 angeordnet. Der Ventildeckel 37 ist vorzugsweise mit dem Ventilgehäuse 2 formschlüssig verbunden. In vorteilhafter Ausführung kann auch eine andere Verbindung zwischen Ventildeckel 37 und Ventilgehäuse 2 zweckmäßig sein. An dem Ventildeckel 37 ist ein Zylinder 39 ausgebildet, welcher konzentrisch zur Längsmittelachse 14 angeordnet ist. Am Zylinder 39 ist eine Anlagefläche 40 ausgebildet, gegen welche die Ventilfeder 21 in erster Stellung des elektromagnetischen Ventils 1 zur Anlage kommt.

Das elektromagnetische Ventil 1 steuert den Durchfluss des Fluids nach folgendem Prinzip:
Bei ausgeschaltetem Strom in der elektrischen Antriebspule 3 ist das elektromagnetische Ventil 1 in der ersten Stellung (Fig. 5). Die Ventilfeder 21 ist gegen die Anlagefläche 40 des Zylinders 39 des Ventildeckels 37 gedrückt. Dabei nimmt die Ventilfeder 21 die metallische Ankerplatte 5 mit, wodurch die Ankerplatte 5 nicht im Kontakt mit der Dichtfläche 9 des Ventilsitzes 8 auf dem Ringelement 10 steht. Das Fluid kann demnach ausgehend von der Gehäuseöffnung 35 über den ersten Strömungskanal 16, die Öffnung 30, das Ringelement 10 und über die Ventilöffnung 29 in einen Ventilraum 15 strömen. Der Ventilraum 15 ist im Ventilgehäuse 2 ausgebildet. Aus dem Ventilraum 15 strömt das Fluid weiter durch die Strömungskanäle 38 der Ankerplatte 5 und durch den Ringspalt 36 zwischen der Ankerplatte 5 und dem Ventilgehäuse 2. Anschließend kann das Fluid durch die Öffnungen der Ventilfeder zum Ventildeckel 37 strömen. Über eine Öffnung 19 des Ventildeckels 37 strömt das Fluid durch mindestens einen zweiten Strömungskanal 17. Der zweite Strömungskanal 17 ist im Ventildeckel 37 ausgebildet ist. Der mindestens eine zweite Strömungskanal 17 verläuft parallel zur Längsmittelachse 14 des elektromagnetischen Ventils 1. In vorteilhaftem Ausführungsbeispiel entspricht die Anzahl der Öffnungen 19 sowie der zweiten Strömungskanäle 17 des Ventildeckels 37 der Anzahl der Ventilöffnungen 29 des Ringelements 10, um über den gesamten Strömungsverlauf des Fluids durch das elektromagnetische Ventil 1 einen nahezu konstanten Strömungsquerschnitt zu ermöglichen.

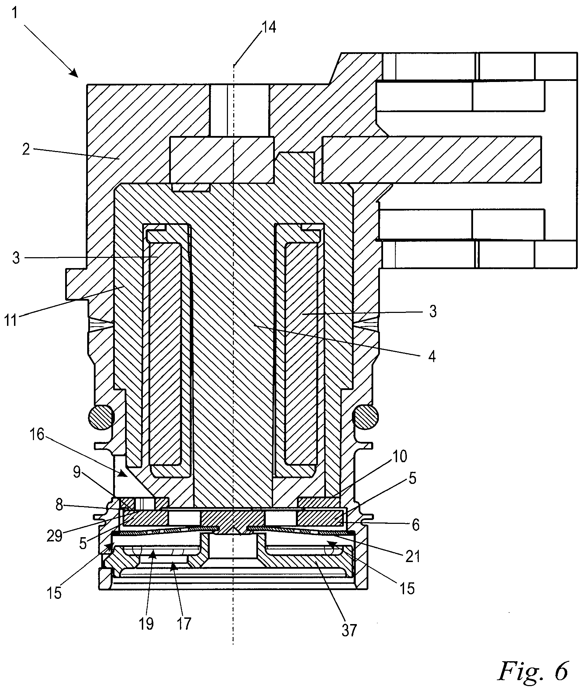

Bei eingeschaltetem Strom in der elektrischen Antriebspule 3 ist das elektromagnetische Ventil 1 in der zweiten Stellung, wie in Fig. 6 gezeigt. Die Ankerplatte 5 wird entgegen der von der Ventilfeder 21 ausgehenden Kraft in Richtung des Magnetkerns 4 durch das anliegende Magnetfeld gezogen und kommt an den Dichtflächen 9 des Ventilsitzes 8 des Ringelementes 10 zur Anlage. Die Ankerplatte 5 verschließt die Ventilöffnung 29 des Ringelementes 10. Das Fluid kann lediglich entlang des ersten Strömungskanals 16 bis zur Ankerplatte 5 fließen. Der Durchfluss des Fluids in den Ventilraum 15 ist gesperrt.

In einer alternativen Ausführungsform des elektromagnetischen Ventils 1 weist das Ringelement 10 lediglich einen einzigen Ventilsitz 8 auf. Anstelle der inneren Öffnung 24 ist der Ventilsitz 8 mittig im Ringelement 10 angeordnet. Dadurch ist auch die Ventilöffnung 29 des Ventilsitzes 8 in etwa koaxial zur Längsmittelachse 14 angeordnet.

In einer weiteren in den Figuren nicht dargestellten alternativen Ausführungsform ist das elektromagnetische Ventil ein stromlos geschlossenes Ventil. Das Ringelement ist im Ventilgehäuse zwischen der metallischen Ankerplatte und dem Ventildeckel angeordnet. Vorzugsweise ist das Ringelement im Ventildeckel gehalten, vorzugsweise eingegossen, insbesondere umspritzt. Das Ringelement weist vorteilhaft einen zentralen Ventilsitz auf, welcher anstelle der inneren Öffnung mittig im Ringelement angeordnet ist. Die Ventilöffnung des Ventilsitzes ist koaxial zur Längsmittelachse angeordnet und mündet in dem Zylinder des Ventildeckels. Der erste Strömungskanal des Ventils verläuft durch den Ventildeckel. Ist die elektrische Antriebsspule unter Strom, wird die metallische Ankerplatte gegen den Magnetkern gezogen und gibt den Ventilsitz frei. Das Fluid kann über den ersten Strömungskanal durch den Ventildeckel in den zweiten Strömungskanal, welcher aus der zentralen Ventilöffnung des Ventilsitzes sowie dem zentralen Zylinder des Ventildeckels besteht, strömen. Ist die elektrische Antriebsspule nicht unter Strom, so wird die Ankerplatte von der Ventilfeder gegen den zentralen Ventilsitz gedrückt. Die Strömungsverbindung zwischen dem ersten Strömungskanal und dem zweiten Strömungskanal ist unterbrochen. Vorteilhaft kann der Ventildeckel auch weitere und/oder andere Strömungskanäle aufweisen.

## Patentansprüche

1. Elektromagnetisches Ventil mit einem Ventilgehäuse (2) und mit mindestens einem Ventilsitz (8) mit einer Dichtfläche (9), sowie mit einem Magnetkreis und einer elektrischen Antriebspule (3) für den Magnetkreis, wobei die Antriebsspule (3) von einem Magnetkern (4) des Magnetkreises durchragt ist, und mit einer mit dem Magnetkern (4) zusammenwirkenden metallischen Ankerplatte (5), die einen Ventilkörper (6) bildet und gegenüber dem Magnetkern (4) beweglich gelagert ist, wobei der Ventilkörper (6) in einer Betriebsstellung an der Dichtfläche (9) des mindestens einen Ventilsitzes (8) anliegt und den Ventilsitz (8) verschließt, und in einer Außerbetriebsstellung den mindestens einen Ventilsitz (8) freigibt,
**dadurch gekennzeichnet, dass** der Ventilsitz (8) eine Dichtfläche (9) aufweist, und dass die Dichtfläche (9) des Ventilsitzes (8) an einem Ringelement (10) ausgebildet ist und das Ringelement (10) mindestens eine Ventilöffnung (29) aufweist.

2. Elektromagnetisches Ventil nach Anspruch 1,
**dadurch gekennzeichnet, dass** das Ringelement (10) aus Metall besteht.

3. Elektromagnetisches Ventil nach Anspruch 1 oder 2,
**dadurch gekennzeichnet, dass** das elektromagnetische Ventil (1) ein Joch (11) umfasst, und dass das Joch (11) mit dem Magnetkern (4) einteilig ausgebildet ist, wobei das Ringelement (10) eine mit dem Joch (11) zumindest teilweise in Kontakt stehende erste Stirnseite (12) besitzt.

4. Elektromagnetisches Ventil nach Anspruch 3
**dadurch gekennzeichnet, dass** das Ringelement (10) am Joch (11) formschlüssig angeordnet ist.

5. Elektromagnetisches Ventil nach einem der Ansprüche 1 bis 4,
**dadurch gekennzeichnet, dass** das Ringelement (10) an seiner von der Antriebsspule (3) abgewandten zweiten Stirnseite (13) einen Absatz (20) aufweist, wobei an dem Absatz (20) die Dichtfläche (9) ausgebildet ist.

6. Elektromagnetisches Ventil nach einem der Ansprüche 1 bis 5,
**dadurch gekennzeichnet, dass** das Ringelement (10) an dem Ventilgehäuse (2) gehalten ist.

7. Elektromagnetisches Ventil nach einem der Ansprüche 1 bis 6,
**dadurch gekennzeichnet, dass** das Ringelement (10) in das Ventilgehäuse (2) eingegossen ist.

8. Elektromagnetisches Ventil nach einem der Ansprüche 1 bis 7,
**dadurch gekennzeichnet, dass** das elektromagnetische Ventil (1) einen Ventilraum (15) aufweist, und dass in den Ventilraum (15) mindestens ein erster Strömungskanal (16) mündet.

9. Elektromagnetisches Ventil nach Anspruch 8,
**dadurch gekennzeichnet, dass** in den Ventilraum (15) mindestens ein zweiter Strömungskanal (17) mündet.

10. Elektromagnetisches Ventil nach Anspruch 8 oder 9,
**dadurch gekennzeichnet, dass** der mindestens eine erste Strömungskanal (16) durch das Ventilgehäuse (2) und durch das Ringelement (10) verläuft und in der Ventilöffnung (29) des Ringelements (10) in den Ventilraum (15) mündet.

11. Elektromagnetisches Ventil nach Anspruch 9 oder 10,
**dadurch gekennzeichnet, dass** an einer dem Ringelement (10) zugewandten Seite des Ventilraums (15) eine Öffnung (19) am Ventilraum (15) ausgebildet ist, wobei der zweite Strömungskanal (17) in der Öffnung (19) in den Ventilraum (15) mündet.

12. Elektromagnetisches Ventil nach einem der Ansprüche 8 bis 10,
**dadurch gekennzeichnet, dass** das Ventilgehäuse (2) mindestens zwei Ventilsitze (8), insbesondere mindestens drei Ventilsitze (8), umfasst.

13. Elektromagnetisches Ventil nach einem der Ansprüche 1 bis 12,
**dadurch gekennzeichnet, dass** die Ankerplatte (5) in Richtung der Außerbetriebsstellung federbelastet ist.
